# EUROPEAN PATENT APPLICATION

(11) **EP 4 173 745 A1**
(43) Date of publication of application: **03.05.2023**
(21) Application number: 21749055.6
(22) Date of filing: 28.06.2021
(51) Int. Cl.: B23B 21/00, B23Q 5/34

(54) **CONVENIENTLY CONTROLLABLE ELECTRONIC LATHE**

(30) Priority: 12.08.2020 CN 202010805507
(71) Applicant: Shandong Shansen Numerical Control Technology Co., Ltd., Zaozhuang, Shandong 277599 (CN)
(72) Inventor: ZHANG, Shiyin, Zaozhuang, Shandong 277599 (CN); LI, Guangran, Zaozhuang, Shandong 277599 (CN); JIANG, Lei, Zaozhuang, Shandong 277599 (CN); ZHANG, Qijia, Zaozhuang, Shandong 277599 (CN); LIU, Jiyu, Zaozhuang, Shandong 277599 (CN); WANG, Hongxing, Zaozhuang, Shandong 277599 (CN); SUN, Qiang, Zaozhuang, Shandong 277599 (CN); HE, Dawei, Zaozhuang, Shandong 277599 (CN); ZHANG, Yunfa, Zaozhuang, Shandong 277599 (CN); YANG, Dewei, Zaozhuang, Shandong 277599 (CN); KONG, Lingdong, Zaozhuang, Shandong 277599 (CN)
(74) Representative: Greaves Brewster LLP
(86) International application number: PCT/CN2021/102645
(87) International publication number: WO 2022/033201

(57) **Abstract**

The present disclosure provides a conveniently operated electronic lathe, belonging to the technical field of electronic lathes. The conveniently operated electronic lathe includes a sliding plate box, a longitudinal and transverse reversing detection switch, a longitudinal and transverse operation handle, a rack, a longitudinal and transverse sliding plate, a numerical control system, an electric cabinet, a spindle box, a spindle gear shifting handle. A shaft I, a shaft II, a shaft III, a shaft IV and a shaft V are all rotatably arranged on the sliding plate box. A gear of the shaft III is fixed to the shaft III. A first gear of the shaft II is engaged with the gear of the shaft III. A second gear of the shaft IV is engaged with the first gear of the shaft V. During use, the convenient operation manner can make an operator master quickly and skillfully. The conveniently operated electronic lathe is more digital, visual, and accurate during part machining by matching a succinct and clear numerical control system, which is not only suitable for machining small batches of parts and but also suitable for the machining a single high-precision part.

## Description

### TECHNICAL FIELD

The present disclosure relates to the field of electronic lathes, in particular, to a conveniently operated electronic lathe.

### BACKGROUND ART

The operation of speed change mechanisms of spindle boxes is complicated during the operation of common lathes. Particularly, the transmission ratio and proper feed of a change gear and a feed box need to be adjusted according to different screw thread specifications when screw threads are machined, so the machining operation is tedious. However, the operation of numerically controlled lathes needs programmed machining programs, and requires operators have certain programming base. In addition, the numerically controlled lathes are particularly suitable for machining small batches of parts with complicated shapes and high required precision.

### SUMMARY

In order to make up for above deficiencies, the present disclosure provides a conveniently operated electronic lathe, which aims to change complicated operation of a speed change mechanism of a spindle box, particularly, the problems according to different screw thread specifications during machining of screw threads.

The present disclosure is implemented as follows:

The present disclosure provides a conveniently operated electronic lathe, including a sliding plate box, a longitudinal and transverse reversing detection switch, a longitudinal and transverse operation handle, a rack, a longitudinal and transverse sliding plate, a numerical control system, an electric cabinet, a spindle box, a spindle gear shifting handle, a spindle gear detection switch, a spindle, a cutter frame, an X-directional hand wheel, a positive and negative rotation control switch, a feed motor, an emergency stop button, a spindle motor, a transmission belt, a spindle encoder, a lathe body, a tailstock, a motor gear, a first gear of shaft I, a second gear of shaft I, a shaft I, a first gear of shaft II, a shaft II, a gear of shaft III, a positive and negative direction detection switch, a quick moving button, a positive and negative direction operation handle, a shaft III, a positive and negative direction detection block, a reversing rod, a reversing clutch, a third gear of shaft I, a first gear of shaft IV, a second gear of shaft IV, a shaft IV, a shaft V, a first gear of shaft V, a second gear of shaft V, an X-directional grating ruler, and a Z-directional grating ruler. The shaft I, the shaft II, the shaft III, the shaft IV and the shaft V are all rotatably arranged on the sliding plate box. The gear of shaft III is fixed to the shaft III. The first gear of shaft II is engaged with the gear of shaft III. The second gear of shaft IV is engaged with the first gear of shaft V The third gear of shaft I and the first gear of shaft IV are engaged together. The second gear of shaft V is fixed to the shaft V. The feed motor is fixed to the interior of the sliding plate box. The rack is mounted on the lathe body. The cutter frame is mounted on the rack. The longitudinal and transverse sliding plate slides on the upper surface of the sliding plate box. The emergency stop button is electrically connected to the numerical control system. The tailstock slides on the lathe body.

Both the Z-directional grating ruler and the X-directional grating ruler are mounted on the lathe body. The numerical control system is fixed to the upper surface of the lathe body. The spindle is mounted on the sliding plate box. The motor gear is fixed to the shaft I. The motor gear is engaged with the first gear of shaft I. The reversing clutch is engaged with the second gear of shaft I by the longitudinal and transverse operation handle through the reversing rod. The second gear of shaft I is engaged with the first gear of shaft II. The first gear of shaft II is fixed to the shaft II. The shaft II is in transmission with the feed motor through the rack.

The longitudinal and transverse reversing detection switch is electrically connected to the numerical control system. The numerical control system is electrically connected to the positive and negative direction operation handle. The positive and negative direction operation handle is electrically connected to the positive and negative direction detection block. The numerical control system is electrically connected to the positive and negative direction detection switch. The feed motor is fixed to the outer wall of the sliding plate box. The end part of the shaft IV is fixed to an output shaft of the feed motor. The positive and negative direction detection switch is electrically connected to the feed motor. The Z-directional grating ruler is mounted on the lathe body. The X-directional grating ruler is electrically connected to the numerical control system.

The positive and negative rotation control switch is mounted on the sliding plate box. The positive and negative rotation control switch is electrically connected to the numerical control system. The positive and negative rotation control switch is arranged on the spindle. The spindle motor is mounted below the lathe body. The spindle is rotatably arranged on the spindle box. An output shaft of the spindle motor is in transmission with the spindle through the transmission belt. The spindle encoder is mounted on one side of the spindle. The spindle gear shifting handle is electrically connected to the numerical control system through the spindle gear detection switch. The numerical control system is connected to the spindle encoder through a data line. The numerical control system and the spindle motor are connected to a frequency converter in the electric cabinet through a data line. The numerical control system is electrically connected to the spindle encoder.

In an embodiment of the present disclosure, a working lamp is fixedly mounted on the lathe body.

In an embodiment of the present disclosure, a cooling system is fixedly mounted on the lathe body.

In an embodiment of the present disclosure, a spindle protective cover is fixedly mounted on the lathe body.

In an embodiment of the present disclosure, both the first gear and the second gear of shaft V are fixed to the shaft V.

In an embodiment of the present disclosure, the working lamp includes a working lamp body and a rotating piece. The rotating piece is fixed to the lathe body. The working lamp body is rotatably arranged on the rotating piece.

In an embodiment of the present disclosure, the spindle motor includes a spindle motor body and a base. The base is fixed to the lower surface of the spindle motor body.

In an embodiment of the present disclosure, a quick moving button is arranged on the positive and negative direction operation handle. The quick moving button is electrically connected to the numerical control system.

In an embodiment of the present disclosure, both the Z-directional hand wheel and the X-directional hand wheel are arranged on the sliding plate box.

In an embodiment of the present disclosure, a scale ring is arranged on the sliding plate box.

The present disclosure has the beneficial effects that: a conveniently operated electronic lathe is obtained through the previously described design. Compared with a common lathe, the conveniently operated electronic lathe simplifies and designs a transmission mechanism of the sliding plate box, optimizes internal structures of the spindle box, and omits a hanging wheel mechanism, a feed box, a lead screw, a feed rod, a switch rod, and the like of the spindle box, so that the whole electronic lathe is reasonable in layout, simple and compact in structure, and convenient to operate; the rotating speed of the spindle, the feed, and the thread pitch can be set randomly. A convenient operation manner can make an operator master quickly and skillfully. The conveniently operated electronic lathe is more digital, visual, and accurate during part machining by matching a succinct and clear numerical control system, which is not only suitable for machining small batches of parts and but also suitable for machining a single high-precision part.

The conveniently operated electronic lathe can realize the machining of parts through simple operations by setting the machining parameters, such as the rotating speed of the spindle, X-axis feed per revolution, Z-axis feed per revolution, metric thread pitch, and imperial screw thread number. In addition, fixed-length machining of inner circles, outer circles, end surfaces, and screw threads can be completed by setting the parameters of fixed-length machining length and cutter relieving length of fixed-length machining.

The sliding plate box and the spindle box do not have too many handles, so the machining of the parts can be realized only by setting the machining parameters on a touch screen of the numerical control system, and the whole operation is simple and convenient, and the whole electronic lathe is reasonable in layout and simple and compact in structure.

### BRIEF DESCRIPTION OF THE DRAWINGS

In order to describe the technical solution of the implementation manners of the present disclosure, accompanying drawings required to be used in the implementation manners of will be briefly introduced. It should be understood that the following accompanying drawings only show some embodiments of the present disclosure, so they should not be regarded as the limitation of the scope. For those of ordinary skill in the art, other related drawings may also be obtained according to these drawings without creative effort.
FIG. 1 is a schematic structural diagram of a conveniently operated electronic lathe provided by the implementation manner of the present disclosure;
FIG. 2 is an enlarged view of A in FIG. 2 provided by the implementation manner of the present disclosure;
FIG. 3 is a schematic structural diagram of a sliding plate box provided by the implementation manner of the present disclosure;
FIG. 4 is an enlarged view of B in FIG. 3 provided by the implementation manner of the present disclosure.

Reference signs in drawings: 1-sliding plate box; 2-Z-directional hand wheel; 3-longitudinal and transverse reversing detection switch; 4-longitudinal and transverse operation handle; 5-rack; 6-longitudinal and transverse sliding plate; 7-working lamp; 701-working lamp body; 702-rotating piece; 8-cooling system; 9-numerical control system; 10-spindle protective cover; 11-electric cabinet; 12-spindle box; 13-spindle gear shifting handle; 14-spindle gear detection switch; 15-spindle; 16-cutter frame; 17-X-directional hand wheel; 18-positive and negative rotation control switch; 19-feed motor; 20-emergency stop button; 21-spindle motor; 211-spindle motor body; 212-base; 22-transmission belt; 23-spindle encoder; 24-lathe body; 25-tailstock; 26-motor gear; 27-first gear of shaft I; 28-second gear of shaft I; 29-shaft I; 30-first gear of shaft II; 31-shaft II; 32-gear of shaft III; 33-positive and negative direction detection switch; 34-quick moving button; 35-positive and negative direction operation handle; 36-shaft III; 37-positive and negative direction detection block; 38-scale ring; 39-reversing rod; 40-reversing clutch; 41-third gear of shaft I; 42-first gear of shaft IV; 43-second gear of shaft IV; 44-shaft IV; 45-shaft V; 46-first gear of shaft V; 47-second gear of shaft V; 48-X-directional grating ruler; 49-Z-directional grating ruler.

### DETAILED DESCRIPTION OF THE EMBODIMENTS

In order to make the purposes, technical solutions, and advantages of the implementation manners of the present disclosure clearer, the technical solutions in the implementation manners of the present disclosure will be described clearly and completely in combination with the accompanying drawings in the implementation manners of the present disclosure. Apparently, the described implementation manners are part rather than all of the implementation manners of the present disclosure. On the basis of the implementation manners of the present disclosure, all other implementation manners obtained by those of ordinary skill in the art without creative effort fall within the scope of protection of the present disclosure.

Therefore, the following detailed description of the embodiments of the present disclosure provided in the accompanying drawings is not intended to limit the scope of protection of the present disclosure, but only represents the selected embodiments of the present disclosure. On the basis of the implementation manners of the present disclosure, all other implementation manners obtained by those of ordinary skill in the art without creative effort fall within the scope of protection of the present disclosure.

It should be noted that: similar numerals and letters represent similar items in the following accompanying drawings. Therefore, once a certain item is defined in one accompanying drawing, it is unnecessary to further define and explain the certain item in subsequent accompanying drawings.

In the description of the present disclosure, it should be understood that the orientations or positional relationships indicated by the terms "center", "longitudinal", "transverse", "length", "width", "thickness", "upper", "lower", "front", "back", "left", "right", "vertical", "horizontal", "top", "bottom", "inside", "outside", "clockwise", "counterclockwise", and the like are the orientations or positional relationships shown in the accompanying drawings, are merely intend to facilitate the description of the present disclosure and simplify the description, are not intended to indicate or imply that the equipment or elements must have specific orientations, or be constructed and operated in specific orientations, and therefore, shall not be construed as a limitation to the present disclosure.

In addition, terms "first" and "second" are only adopted for description and should not be understood to indicate or imply relative importance or implicitly indicate the number of indicated technical features. Therefore, features limited by "first" or "second" may explicitly or implicitly include one or more features. In the description of the present disclosure, "multiple" means two or more, unless otherwise limited explicitly and specifically.

In the present disclosure, unless otherwise specified and limited explicitly, the terms "mounted", "linked", "connected", and "arranged" are to be interpreted broadly, for example, may be fixedly connected, or detachably connected, or integrated; may be directly connected, or connected through an intermediate medium, and may also be internal communication of two elements or interaction between two elements. Those of ordinary skill in the art may understand specific meanings of the above terms in the present disclosure in according specific cases.

In the present disclosure, unless otherwise explicitly specified and defined, a first feature "above" or "below" of a second feature may include that the first feature is in direct contact the second features, or may include that the first and second features are not in direct contact, but in contact through other features therebetween. In addition, the first feature "above", "over", and "on" the second feature, includes that the first feature is directly above and obliquely above the second feature, or only means that the horizontal height of the first feature is higher than that of the second feature. The first feature "under", "below", and "underneath" the second feature includes that the first feature is directly below and obliquely below the second feature, or only means that the horizontal height of the first feature is lower than that of the second feature.

### Embodiments

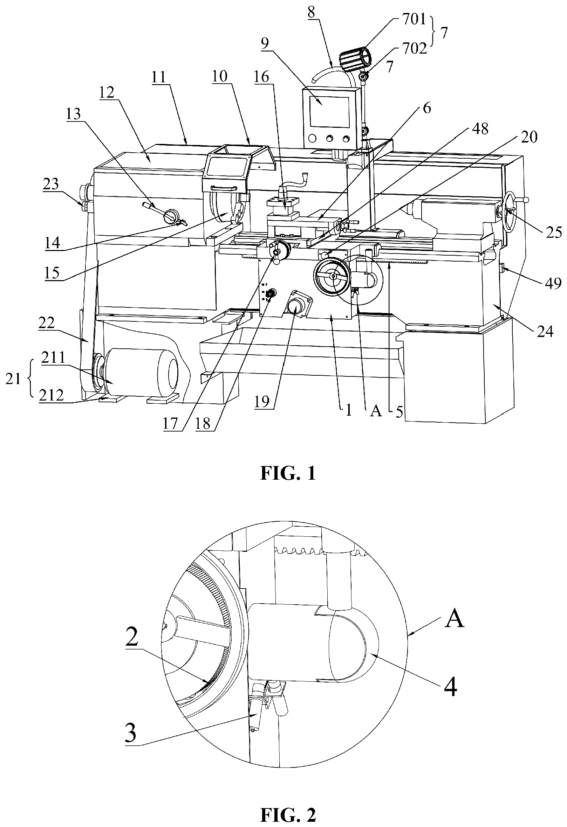

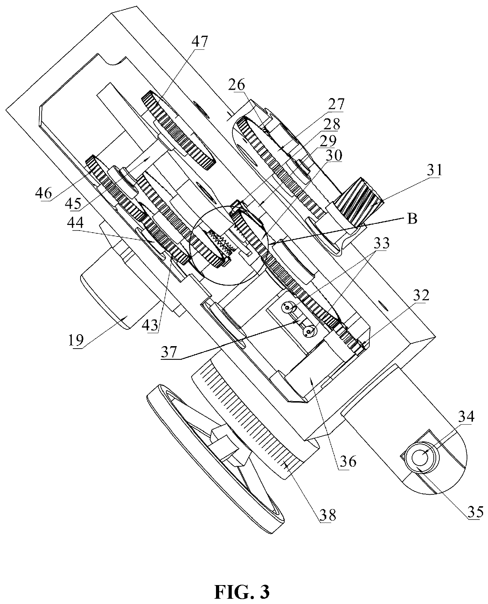

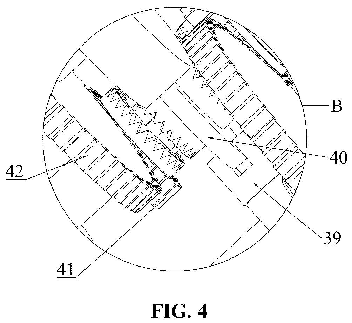

Referring to FIG. 1 to FIG. 4, the present disclosure provides a technical solution: a conveniently operated electronic lathe includes a sliding plate box 1, a longitudinal and transverse reversing detection switch 3, a longitudinal and transverse operation handle 4, a rack 5, a longitudinal and transverse sliding plate 6, a numerical control system 9, an electric cabinet 11, a spindle box 12, a spindle gear shifting handle 13, a spindle gear detection switch 14, a spindle 15, a cutter frame 16, an X-directional hand wheel 17, a positive and negative rotation control switch 18, a feed motor 19, an emergency stop button 20, a spindle motor 21, a transmission belt 22, a spindle encoder 23, a lathe body 24, a tailstock 25, a motor gear 26, a first gear of shaft I 27, a second gear of shaft I 28, a shaft 129, a first gear of shaft II 3 0, a shaft II 3 1, a gear of shaft III 32, a positive and negative direction detection switch 33, a quick moving button 34, a positive and negative direction operation handle 35, a shaft III 36, a positive and negative direction detection block 37, a reversing rod 39, a reversing clutch 40, a third gear of shaft I 41, a first gear of shaft IV 42, a second gear of shaft IV 43, a shaft IV 44, a shaft V 45, a first gear of shaft V 46, a second gear of shaft V 47, an X-directional grating ruler 48, and a Z-directional grating ruler 49. The shaft I 29, the shaft II 3 1, the shaft III 36, the shaft IV 44 and the shaft V 45 are all rotatably arranged on the sliding plate box 1. The gear of shaft III 32 is fixed to the shaft III 36. The first gear of shaft II 30 is engaged with the gear of shaft III 32. The second gear of shaft IV 43 is engaged with the first gear of shaft V 46. The third gear of shaft I 41 and the first gear of shaft IV 42 are engaged together. The second gear of shaft V 47 is fixed to the shaft V 45. Both the first gear of shaft V 46 and the second gear of shaft V 47 are fixed to the shaft V 45. The shaft V 45 transfers the power to the gear lead screw on the longitudinal and transverse sliding plate 6 to change the rotating movement of the feed motor 19 into transverse linear movement of the cutter frame 16. The feed motor 19 is fixed to the interior of the sliding plate box 1. The rack 5 is mounted on the lathe body 24. The cutter frame 16 is mounted on the rack 5. The longitudinal and transverse sliding plate 6 slides on the upper surface of the sliding plate box 1. The emergency stop button 20 is electrically connected to the numerical control system 9. The tailstock 25 slides on the lathe body 24.

Both the Z-directional grating ruler 49 and the X-directional grating ruler 48 are mounted on the lathe body 24. The numerical control system 9 is fixed to the upper surface of the lathe body 24. The spindle 15 is mounted on the sliding plate box 1. The motor gear 26 is fixed to the shaft 129. The motor gear 26 is engaged with the first gear of shaft I 27. The reversing clutch 40 is engaged with the second gear of shaft I 28 by the longitudinal and transverse operation handle 4 through the reversing rod 39. The second gear of shaft I 28 is engaged with the first gear of shaft II 30. The first gear of shaft II 30 is fixed to the shaft II 31. The shaft II 31 is in transmission with the feed motor 19 through the rack 5.

The longitudinal and transverse reversing detection switch 3 is electrically connected to the numerical control system 9. The numerical control system 9 is electrically connected to the positive and negative direction operation handle 35. The positive and negative direction operation handle 35 is electrically connected to the positive and negative direction detection block 37. The quick moving button 34 is arranged on the positive and negative direction operation handle 35. The quick moving button 34 is electrically connected to the numerical control system 9. The quick moving button 34 can make the cutter frame 16 realize quick transverse movement. The numerical control system 9 is electrically connected to the positive and negative direction detection switch 33. The feed motor 19 is fixed to the outer wall of the sliding plate box 1. Both the Z-directional hand wheel 2 and the X-directional hand wheel 17 are arranged on the sliding plate box 1. Manual feed of the cutter frame 16 in a Z-axis direction can be realized by operating the Z-directional hand wheel 2. The feed of the cutter frame 16 in an X-axis direction can be realized by manually operating the X-directional hand wheel 17. The end part of the shaft IV 44 is fixed to an output shaft of the feed motor 19. The positive and negative direction detection switch 33 is electrically connected to the feed motor 19. The Z-directional grating ruler 49 is mounted on the lathe body 24. The X-directional grating ruler 48 is electrically connected to the numerical control system 9.

The positive and negative rotation control switch 18 is mounted on the sliding plate box 1. The positive and negative rotation control switch 18 is electrically connected to the numerical control system 9. The positive and negative rotation control switch 18 is arranged on the spindle 15. The spindle motor 21 is mounted below the lathe body 24. The spindle motor 21 includes a spindle motor body 211 and a base 212. The base 212 is fixed to the lower surface of the spindle motor body 211. The base 212 makes the lower surface of the spindle motor body 211 away from the ground, which effectively prevents the stains on the ground from corroding the lower surface of the spindle motor body 211. The spindle 15 is rotatably arranged on the spindle box 12. An output shaft of the spindle motor 21 is in transmission with the spindle 15 through the transmission belt 22. The spindle encoder 23 is mounted on one side of the spindle 15. The spindle gear shifting handle 13 is electrically connected to the numerical control system 9 through the spindle gear detection switch 14. The numerical control system 9 is connected to the spindle encoder 23 through a data line. The numerical control system 9 and the spindle motor 21 are connected to a frequency converter in the electric cabinet 11 through a data line. The numerical control system 9 is electrically connected to the spindle encoder 23. A working lamp 7 is fixedly mounted on the lathe body 24. The working lamp 7 can realize lighting during working. The working lamp 7 includes a working lamp body 701 and a rotating piece 702. The rotating piece 702 is fixed to the lathe body 24. The working lamp body 701 is rotatably arranged on the rotating piece 702. The rotating piece 702 facilitates the adjustment of the light irradiating direction of the working lamp body 701. A cooling system 8 is fixedly mounted on the lathe body 24. The cooling system 8 realizes cooling during machining. A spindle protective cover 10 is fixedly mounted on the lathe body 24. The spindle protective cover 10 achieves an effect of safety protection. A scale ring 38 is arranged on the sliding plate box 1. The scale ring 38 facilitates more accurate rotation by the operator.

Specifically, a working principle of the conveniently operated electronic lathe: during use, power is transferred to the first gear of shaft I 27 on the shaft I 29 through the motor gear 26 so as to drive the shaft I 29 to move. The reversing clutch 40 is engaged with the second gear of shaft I 28 on the shaft I 29 through the movement of the reversing rod 39 by operating the longitudinal and transverse operation handle 4, so as to transfer power to the first gear of shaft II 30 on the shaft II 3 1. The first gear of shaft II 30 on the shaft II 31 is connected to the shaft II 31. The rotating movement of the feed motor 19 is changed into longitudinal linear movement of the cutter frame 16 by the shaft II 31 through the movement with the rack 5. A longitudinal signal is detected through the longitudinal and transverse reversing detection switch 3 connected to the numerical control system 9, so as to set a length parameter in the numerical control system 9 to complete fixed-length feed movement to realize the machining in a length direction. The positive and negative direction operation handle 35 is operated to stir the position of the positive and negative direction detection block 37 by replacing parameters of the numerical control system 9. Positive and negative direction signals are detected by the positive and negative direction detection switch 33 connected to the numerical control system 9, so that the feed motor 19 drives longitudinal feed movement. The Z-directional grating ruler 49 mounted on the lathe body 24 displays a position through the numerical control system 9, which intuitively feeds back data information of movement, and improves the machining precision. Meanwhile, manual feed in an X-axis direction can be realized by manually operating the X-directional hand wheel 17. The feed motor 19 drives the cutter frame 16 to perform longitudinal linear movement by matching the rack 5 mounted on the lathe body 24 to complete turning movement conveniently and quickly.

The reversing clutch 40 is engaged with the second gear of shaft I 41 on the shaft I 29 through the movement of the reversing rod 39 by operating the longitudinal and transverse operation handle 4, so as to transfer power to the first gear of shaft IV 42 on the shaft IV 44. The first gear of shaft IV 42 on the shaft IV 44 is connected to the shaft IV 44. The shaft IV 44 transfers power to the second gear of shaft V 47 on the shaft V 45 through the shaft V 45 by means of the first gear of shaft V 46 on the shaft V 45, so as to transfer the power to the gear lead screw on the longitudinal and transverse sliding plate 6 to change the rotating movement of the feed motor 19 into transverse linear movement of the cutter frame 16. A transverse signal is detected through the longitudinal and transverse reversing detection switch 3 connected to the numerical control system 9, so as to set a length parameter in an operation system to complete the machining of the outer circle or the inner circle. The positive and negative direction operation handle 35 is operated to stir the position of the positive and negative direction detection block 37 by replacing parameters of the numerical control system 9. Positive and negative direction signals are detected by the positive and negative direction detection switch 33 connected to the numerical control system 9, so that the feed motor 19 drives transverse feed movement. The X-directional grating ruler 48 mounted on the longitudinal and transverse sliding plate 6 displays a position through the numerical control system 9, which intuitively feeds back data information of movement, and improves the machining precision. Meanwhile, manual feed in a Z-axis direction can be realized by manually operating the Z-directional hand wheel 2. The feed motor 19 drives the cutter frame 16 to perform transverse linear movement to complete turning movement conveniently and quickly.

The positive and negative rotation control switch 18 is mounted on the sliding plate box 1. Positive and negative rotation of the spindle 15 are realized through a touch type numerical control system 9, and stepless speed change within the gear of the spindle box 12 is realized through the control of the numerical control system 9. The spindle motor 21 is mounted below the lathe body 24. Power is transferred to the spindle 15 in the spindle box 12 through a transmission belt 22. The spindle encoder 23 is mounted on one side of the spindle 15 and is used for detecting the rotating speed of the spindle 15. When the spindle gear shifting handle 13 is stirred, a gear signal is transmitted to the numerical control system 9 by the spindle gear detection switch 14 through the data line. The numerical control system 9 is connected to the spindle encoder 23 through the data line. The numerical control system 9 and the spindle motor 21 are connected to a frequency converter in the electric cabinet 11 through the data line. Stepless speed change within the gear of the spindle 15 is realized by controlling the frequency converter. The numerical control system 9 collects a signal of the spindle encoder 23, and controls a driver through the operation of the operation system. The driver controls the feed motor 19 in the sliding plate box 1 to operate. Feed machining or screw thread machining of the X-axis movement or the Z-axis movement relative to the rotating speed of the spindle 15 is realized through the sliding plate box 1. The whole conveniently operated electronic lathe is more convenient to operate, and is higher in practicability.

Compared with a common lathe, the conveniently operated electronic lathe simplifies and designs a transmission mechanism of the sliding plate box 1, optimizes internal structures of the spindle box 12, and omits a hanging wheel mechanism, a feed box, a lead screw, a feed rod, a switch rod, and the like, of the spindle box 12, so that the whole electronic lathe is reasonable in layout, simple and compact in structure, and convenient to operate; the rotating speed of the spindle 15, the feed, and the thread pitch can be set randomly. A convenient operation manner can make an operator master quickly and skillfully. The conveniently operated electronic lathe is more digital, visual, and accurate during part machining by matching a succinct and clear numerical control system 9, which is not only suitable for machining small batches of parts and but also suitable for machining a single high-precision part.

It should be noted that, specific model numbers and specifications of the longitudinal and transverse reversing detection switch 3, the working lamp 7, the numerical control system 9, the electric cabinet 11, the spindle gear detection switch 14, the positive and negative rotation control switch 18, the feed motor 19, the spindle motor 21, the spindle encoder 23, the positive and negative direction detection switch 33, the positive and negative direction detection block 37, and the reversing clutch 40 need to be selected and determined according to actual specifications of the device. Specific type selection calculation method adopts the prior art in the field, so it will not be described in detail.

The power supply and principles of the longitudinal and transverse reversing detection switch 3, the working lamp 7, the numerical control system 9, the electric cabinet 11, the spindle gear detection switch 14, the positive and negative rotation control switch 18, the feed motor 19, the spindle motor 21, the spindle encoder 23, the positive and negative direction detection switch 33, the positive and negative direction detection block 37, and the reversing clutch 40 are clear to those skilled in the art, which will not be described in detail here.

The above is only preferred implementation manners of the present disclosure, and is not intended to limit the present disclosure. For those skilled in the art, the present disclosure may have various modifications and changes. Any modifications, equivalent replacements, improvements and the like made within the spirit and principle of the present disclosure shall fall within the scope of protection of the present disclosure.

## Claims

1. A conveniently operated electronic lathe, comprising a sliding plate box (1), a longitudinal and transverse reversing detection switch (3), a longitudinal and transverse operation handle (4), a rack (5), a longitudinal and transverse sliding plate (6), a numerical control system (9), an electric cabinet (11), a spindle box (12), a spindle gear shifting handle (13), a spindle gear detection switch (14), a spindle (15), a cutter frame (16), an X-directional hand wheel (17), a positive and negative rotation control switch (18), a feed motor (19), an emergency stop button (20), a spindle motor (21), a transmission belt (22), a spindle encoder (23), a lathe body (24), a tailstock (25), a motor gear (26), a first gear of shaft I (27), a second gear of shaft I (28), a shaft I (29), a first gear of shaft II (30), a shaft II (31), a gear of shaft III (32), a positive and negative direction detection switch (33), a quick moving button (34), a positive and negative direction operation handle (35), a shaft III (36), a positive and negative direction detection block (37), a reversing rod (39), a reversing clutch (40), a third gear of shaft I (41), a first gear of shaft IV (42), a second gear of shaft IV (43), a shaft IV (44), a shaft V (45), a first gear of shaft V (46), a second gear of shaft V (47), an X-directional grating ruler (48), and a Z-directional grating ruler (49), wherein the shaft I (29), the shaft II (31), the shaft III (36), the shaft IV (44) and the shaft V (45) are all rotatably arranged on the sliding plate box (1); the gear of shaft III (32) is fixed to the shaft III (36); the first gear of shaft II (30) is engaged with the gear of shaft III (32); the second gear of shaft IV (43) is engaged with the first gear of shaft V (46); the third gear of shaft I (41) and the first gear of shaft IV (42) are engaged together; the second gear of shaft V (47) is fixed to the shaft V (45); the feed motor (19) is fixed to the interior of the sliding plate box (1); the rack (5) is mounted on the lathe body (24); the cutter frame (16) is mounted on the rack (5); the longitudinal and transverse sliding plate (6) slides on the upper surface of the sliding plate box (1); the emergency stop button (20) is electrically connected to the numerical control system (9); the tailstock (25) slides on the lathe body (24);
both the Z-directional grating ruler (49) and the X-directional grating ruler (48) are mounted on the lathe body (24); the numerical control system (9) is fixed to the upper surface of the lathe body (24); the spindle (15) is mounted on the sliding plate box (1); the motor gear (26) is fixed to the shaft I (29); the motor gear (26) is engaged with the first gear of shaft I (27); the reversing clutch (40) is engaged with the second gear of shaft I (28) by the longitudinal and transverse operation handle (4) through the reversing rod (39); the second gear of shaft I (28) is engaged with the first gear of shaft II (30); the first gear of shaft II (30) is fixed to the shaft II (31); the shaft II (31) is in transmission with the feed motor (19) through the rack (5);
the longitudinal and transverse reversing detection switch (3) is electrically connected to the numerical control system (9); the numerical control system (9) is electrically connected to the positive and negative direction operation handle (35); the positive and negative direction operation handle (35) is electrically connected to the positive and negative direction detection block (37); the numerical control system (9) is electrically connected to the positive and negative direction detection switch (33); the feed motor (19) is fixed to the outer wall of the sliding plate box (1); the end part of the shaft IV (44) is fixed to an output shaft of the feed motor (19); the positive and negative direction detection switch (33) is electrically connected to the feed motor (19); the Z-directional grating ruler (49) is mounted on the lathe body (24); the X-directional grating ruler (48) is electrically connected to the numerical control system (9);
the positive and negative rotation control switch (18) is mounted on the sliding plate box (1); the positive and negative rotation control switch (18) is electrically connected to the numerical control system (9); the positive and negative rotation control switch (18) is arranged on the spindle (15); the spindle motor (21) is mounted below the lathe body (24); the spindle (15) is rotatably arranged on the spindle box (12); an output shaft of the spindle motor (21) is in transmission with the spindle (15) through the transmission belt (22); the spindle encoder (23) is mounted on one side of the spindle (15); the spindle gear shifting handle (13) is electrically connected to the numerical control system (9) through the spindle gear detection switch (14); the numerical control system (9) is connected to the spindle encoder (23) through a data line; the numerical control system (9) and the spindle motor (21) are connected to a frequency converter in the electric cabinet (11) through a data line; the numerical control system (9) is electrically connected to the spindle encoder (23).

2. The conveniently operated electronic lathe according to claim 1, wherein a working lamp (7) is fixedly mounted on the lathe body (24).

3. The conveniently operated electronic lathe according to claim 1, wherein a cooling system (8) is fixedly mounted on the lathe body (24).

4. The conveniently operated electronic lathe according to claim 1, wherein a spindle protective cover (10) is fixedly mounted on the lathe body (24).

5. The conveniently operated electronic lathe according to claim 1, wherein the first gear of shaft V (46) and the second gear of shaft V (47) are both fixed to the shaft V (45).

6. The conveniently operated electronic lathe according to claim 2, wherein the working lamp (7) comprises a working lamp body (701) and a rotating piece (702); the rotating piece (702) is fixed to the lathe body (24); the working lamp body (701) is rotatably arranged on the rotating piece (702).

7. The conveniently operated electronic lathe according to claim 1, wherein the spindle motor (21) comprises a spindle motor body (211) and a base (212); the base (212) is fixed to the lower surface of the spindle motor body (211).

8. The conveniently operated electronic lathe according to claim 1, wherein the quick moving button (34) is arranged on the positive and negative direction operation handle (35); the quick moving button (34) is electrically connected to the numerical control system (9).

9. The conveniently operated electronic lathe according to claim 1, wherein both the Z-directional hand wheel (2) and the X-directional hand wheel (17) are arranged on the sliding plate box (1).

10. The conveniently operated electronic lathe according to claim 1, wherein a scale ring (38) is arranged on the sliding box body (1).

11. A conveniently operated electronic lathe, comprising a sliding plate box (1), a longitudinal and transverse reversing detection switch (3), a longitudinal and transverse operation handle (4), a rack (5), a longitudinal and transverse sliding plate (6), a numerical control system (9), an electric cabinet (11), a spindle box (12), a spindle gear shifting handle (13), a spindle gear detection switch (14), a spindle (15), a cutter frame (16), an X-directional hand wheel (17), a positive and negative rotation control switch (18), a feed motor (19), an emergency stop button (20), a spindle motor (21), a transmission belt (22), a spindle encoder (23), a lathe body (24), a tailstock (25), a motor gear (26), a first gear of shaft I (27), a second gear of shaft I (28), a shaft I (29), a first gear of shaft II (30), a shaft II (31), a gear of shaft III (32), a positive and negative direction detection switch (33), a quick moving button (34), a positive and negative direction operation handle (35), a shaft III (36), a positive and negative direction detection block (37), a reversing rod (39), a reversing clutch (40), a third gear of shaft I (41), a first gear of shaft IV (42), a second gear of shaft IV (43), a shaft IV (44), a shaft V (45), a first gear of shaft V (46), a second gear of shaft V (47), an X-directional grating ruler (48), and a Z-directional grating ruler (49), wherein the shaft I (29), the shaft II (31), the shaft III (36), the shaft IV (44) and the shaft V (45) are all rotatably arranged on the sliding plate box (1); the gear of shaft III (32) is fixed to the shaft III (36); the first gear of shaft II (30) is engaged with the gear of shaft III (32); the second gear of shaft IV (43) is engaged with the first gear of shaft V (46); the third gear of shaft I (41) and the first gear of shaft IV (42) are engaged together; the second gear of shaft V (47) is fixed to the shaft V (45); the feed motor (19) is fixed to the interior of the sliding plate box (1); the rack (5) is mounted on the lathe body (24); the cutter frame (16) is mounted on the rack (5); the longitudinal and transverse sliding plate (6) slides on the upper surface of the sliding plate box (1); the emergency stop button (20) is electrically connected to the numerical control system (9); the tailstock (25) slides on the lathe body (24);
both the Z-directional grating ruler (49) and the X-directional grating ruler (48) are mounted on the lathe body (24); the numerical control system (9) is fixed to the upper surface of the lathe body (24); the motor gear (26) is engaged with the first gear of shaft I (27); the reversing clutch (40) can be engaged with the second gear of shaft I (28) by the longitudinal and transverse operation handle (4) through the reversing rod (39); the second gear of shaft I (28) is engaged with the first gear of shaft II (30); the first gear of shaft II (30) is fixed to the shaft II (31); the shaft II (31) and the feed motor (19) are in transmission with each other through the rack (5); rotating movement of the feed motor (19) is changed into longitudinal linear movement of the cutter frame (16) by the shaft II (31) through the movement with the rack (5); the reversing clutch (40) can be engaged with the third gear of shaft I (41) by the longitudinal and transverse operation handle (4) through the reversing rod (39), so as to transfer power to the first gear of shaft IV (42) on the shaft IV (44); the shaft IV (44) transfers power to the second gear of shaft V (47) on the shaft V (45) through the first gear of shaft V (46) on the shaft V (45), so as to transfer the power to a gear screw on the longitudinal and transverse sliding plate (6) and change the rotating movement of the feed motor (19) into transverse linear movement of the cutter frame (16);
the longitudinal and transverse reversing detection switch (3) is electrically connected to the numerical control system (9); the numerical control system (9) is electrically connected to the positive and negative direction operation handle (35); the positive and negative direction operation handle (35) is electrically connected to the positive and negative direction detection block (37); the numerical control system (9) is electrically connected to the positive and negative direction detection switch (33); the feed motor (19) is fixed to the outer wall of the sliding plate box (1); the positive and negative direction detection switch (33) is electrically connected to the feed motor (19); the Z-directional grating ruler (49) displays a position through the numerical control system (9); the X-directional grating ruler (48) is electrically connected to the numerical control system (9);
the positive and negative rotation control switch (18) is mounted on the sliding plate box (1); the positive and negative rotation control switch (18) is electrically connected to the numerical control system (9); the positive and negative rotation control switch (18) is arranged on the spindle (15); the spindle motor (21) is mounted below the lathe body (24); the spindle (15) is rotatably arranged on the spindle box (12); an output shaft of the spindle motor (21) is in transmission with the spindle (15) through the transmission belt (22); the spindle encoder (23) is mounted on one side of the spindle (15); the spindle gear shifting handle (13) is electrically connected to the numerical control system (9) through the spindle gear detection switch (14); the numerical control system (9) is connected to the spindle encoder (23) through a data line; the numerical control system (9) and the spindle motor (21) are connected to a frequency converter in the electric cabinet (11) through a data line; the numerical control system (9) is electrically connected to the spindle encoder (23).

12. The conveniently operated electronic lathe according to claim 11, wherein a working lamp (7) is fixedly mounted on the lathe body (24).

13. The conveniently operated electronic lathe according to claim 11, wherein a cooling system (8) is fixedly mounted on the lathe body (24).

14. The conveniently operated electronic lathe according to claim 11, wherein a spindle protective cover (10) is fixedly mounted on the lathe body (24).

15. The conveniently operated electronic lathe according to claim 11, wherein the first gear of shaft V (46) and the second gear of shaft V (47) are both fixed to the shaft V (45).

16. The conveniently operated electronic lathe according to claim 12, wherein the working lamp (7) comprises a working lamp body (701) and a rotating piece (702); the rotating piece (702) is fixed to the lathe body (24); the working lamp body (701) is rotatably mounted on the rotating piece (702).

17. The conveniently operated electronic lathe according to claim 11, wherein the spindle motor (21) comprises a spindle motor body (211) and a base (212); the base (212) is fixed to the lower surface of the spindle motor body (211).

18. The conveniently operated electronic lathe according to claim 11, wherein the quick moving button (34) is arranged on the positive and negative direction operation handle (35); the quick moving button (34) is electrically connected to the numerical control system (9).

19. The conveniently operated electronic lathe according to claim 11, wherein both the Z-directional hand wheel (2) and the X-directional hand wheel (17) are arranged on the sliding plate box (1).

20. The conveniently operated electronic lathe according to claim 11, wherein the scale ring (38) is arranged on the sliding plate box (1).
